# FASCICULE DE BREVET EUROPEEN

(11) **EP 3 472 380 B1**
(45) Date de publication et mention de la délivrance du brevet: **24.02.2021**
(21) Numéro de dépôt: 17783905.7
(22) Date de dépôt: 09.06.2017
(51) Int. Cl.: D04H 1/4209, C03B 37/07, D04H 1/4218, D04H 3/002, G01N 25/72

(54) **INSTALLATION DE TRAITEMENT D'UN MATELAS DE FIBRES MINERALES PAR DETECTION ET EVACUATION DE DEFAUTS LOCALISES, ET PROCEDE CORRESPONDANT**
VORRICHTUNG ZUR BEHANDLUNG EINER MINERALFASERMATTE DURCH ERKENNUNG UND ENTFERNUNG VON LOKALISIERTEN DEFEKTEN SOWIE ENTSPRECHENDES VERFAHREN
APPARATUS FOR TREATING A MINERAL FIBER MAT BY DETECTING AND REMOVING LOCALISED DEFECTS, AND CORRESPONDING METHOD

(30) Priorité: 17.06.2016 FR 1655654
(43) Date de publication de la demande: 24.04.2019
(73) Titulaire: SAINT-GOBAIN ISOVER, 92400 Courbevoie (FR)
(72) Inventeur: ROUCHON, Jean-Maurice, 23000 Saint Sulpice Le Gueretois (FR)
(74) Mandataire: Saint-Gobain Recherche
(86) Numéro de dépôt international: PCT/FR2017/051469
(87) Numéro de publication internationale: WO 2017/216453

(56) Documents cités:
- EP-A1- 2 947 117
- WO-A1-2007/128942
- JP-A- 2003 105 665

## Description

Le présent exposé concerne la fabrication de produits en laine minérale, notamment à base de laine de roche ou de laine de verre. Plus particulièrement, le présent exposé se rapporte au traitement de défauts localisés qui peuvent notamment être présents au sein de matelas fibreux obtenus au cours ou à l'issue d'un processus de fabrication de produits destinés par exemple à l'isolation acoustique et/ou thermique.

Les produits d'isolation à base de laine minérale commercialisés à l'heure actuelle sont typiquement constitués de panneaux, plaques, rouleaux ou produits en forme tubulaire ou autre obtenus à partir d'un matelas ou feutre de fibres minérales, telles que des fibres de verre ou des fibres de roche, consolidé par un liant organique ou minéral, ou par une technique mécanique telle que l'aiguilletage. Ils peuvent aussi se présenter sous la forme de flocons de laine en vrac, obtenus à partir d'un matelas ou d'une nappe de fibres minérales collectées sans apport de liant, puis réduit en amas fibreux de petite taille par une technique dite de nodulage.

Le procédé de fabrication de ces matelas de fibres est bien connu et comprend typiquement la succession des étapes suivantes :
- la fusion de la matière minérale,
- la transformation en fibres, par une technique de fibrage dite rotative utilisant des organes de fibrages en rotation, ou par un technique d'atténuation par jets gazeux de grande vitesse,
- éventuellement la pulvérisation sur les fibres d'un liquide destiné à l'encollage ou l'ensimage des fibres,
- l'accumulation des fibres sur une surface de réception en forme de couche plus ou moins épaisse appelée nappe ou matelas,
- des traitements thermique, mécanique ou thermomécanique ou moulage de la nappe ou du matelas pour lui donner une cohésion ou au contraire le réduire en fragments,
- une préparation finale des produits résultants.

Ainsi par exemple dans le cas de la laine de roche, le procédé de fabrication comprend typiquement la succession des étapes suivantes :
- la fusion de la roche généralement dans un four ou un cubilot à une température de l'ordre de 1500°C,
- le fibrage, c'est-à-dire l'obtention de fibres de roche par déversement du matériau en fusion dans un dispositif dit de centrifugation externe connu à cet effet, équipé d'une succession de rotors à axe horizontal,
- la pulvérisation d'une composition d'encollage comprenant un liant généralement thermo-durcissable en solution aqueuse sur les fibres nouvellement formées,
- la réception des fibres imprégnées du liant sous forme d'une nappe de fibres encollées, sur un tapis de réception,
- éventuellement un nappage superposant plusieurs couches de ladite nappe de fibres,
- une cuisson dans une étuve ou un four à une température et pendant une durée suffisante pour permettre le durcissement et la réticulation du liant et l'élimination de l'eau résiduelle,
- une découpe du matelas de fibres, dans le sens longitudinal (afin par exemple d'éviter des bords non réguliers), transversal et éventuellement dans le sens de l'épaisseur (refente), généralement au moyen d'une scie ou d'un massicot, de manière à obtenir des blocs qui pourront ensuite être disposés en plaques ou en rouleau,
- éventuellement le conditionnement des plaques ou rouleaux ainsi obtenues, par exemple leur emballage par film plastique, puis
- le stockage des plaques.

Le procédé de fabrication de laine de verre se décompose de façon similaire à la différence près qu'on réalise la fusion d'un mélange de matières premières vitrifiables dans un four et qu'on utilise un dispositif dit de centrifugation interne pour le fibrage, qui comporte un ou plusieurs organes de fibrage appelés assiette ou disque de fibrage, en rotation autour d'un axe vertical et comportant une paroi annulaire périphérique percée d'orifices au travers desquels la matière en fusion est éjectée sous forme de filaments étirés ensuite par des jets de gaz à grande vitesse.

Dans le cadre du procédé de fabrication tel qu'il vient d'être décrit, certains défauts peuvent apparaître, liés à la variation de certains paramètres du procédé ou au disfonctionnement de certains appareils.

Deux catégories de défauts localisés, c'est-à-dire présents uniquement en certains points très localisés du feutre, sont décrites ci-dessous à titre d'exemple :
1°) les défauts du type « points chauds », qui correspondent à des zones de forte densité en roche ou en verre. De tels défauts sont issus du processus de fibrage. Ils peuvent résulter d'instabilités ou d'accumulations de matière infibrée. Ils peuvent aussi se présenter sous la forme d'inclusions solides telles que des morceaux de verre ayant débordé de l'assiette dans le cas de la laine de verre, voire des morceaux métalliques issus de l'usure d'un organe de fibrage, ou encore des infondus ou des morceaux de coke en provenance du cubilot dans le cas de la laine de roche. Ils se caractérisent par des amas très localisés à l'intérieur du matelas fibreux. Ces amas peuvent soit refroidir rapidement au sein du feutre et donner naissance ainsi à des zones extrêmement denses et dures sur lesquels les dispositifs de coupe (scie, massicot) peuvent ensuite venir de briser ou se fendre, soit refroidir beaucoup plus lentement du fait de l'inertie thermique de la masse chaude prise dans un matelas isolant, ce qui peut dans les cas extrêmes aboutir à la prise en feu de l'ensemble du produit, par exemple dans des zones de stockage ou lors du transport par camion ;
2°) les défauts du type « points humides », qui apparaissent à des endroits où, lors de l'étape de fibrage, un amas de densité supérieure d'eau et/ou de résine (liant) se forme. Lors de l'étape de séchage, l'air chaud traversant le matelas a alors tendance à contourner ce point de densité supérieure, au niveau duquel subsiste donc une forte humidité. Ces points humides peuvent ensuite générer des défauts esthétiques lors de l'utilisation. Une isolation de murs par l'extérieur comprenant un panneau d'isolation recouvert d'un enduit pourra ainsi présenter des taches indésirables de couleur marron, après la mise en oeuvre, au niveau des points humides du panneau.

La demande de brevet WO 2007/128942 décrit une méthode de détection de défauts localisés du type précité dans un matelas de fibres minérales liées par un liant, en sortie du processus de fabrication, autrement dit en sortie de l'étuve de réticulation. Selon cette méthode, le dispositif de détection peut être couplé à des moyens de régulation d'au moins un paramètre choisi dans le groupe constitué par la composition du liant, la force de l'aspiration, la température de réticulation des fibres, le temps de séjour dans les moyens de réticulation. Selon une variante, le dispositif de détection peut aussi être couplé à des moyens de régulation d'un organe disposé en aval du dispositif d'analyse, ledit organe étant configuré pour isoler et/ou déclasser les zones du matelas incluant les défauts ou pour effectuer un marquage très précis desdites zones, par exemple en vue d'une découpe ou d'un tri ultérieur.

Cette méthode ne permet toutefois pas d'évacuer les défauts, et a fortiori suffisamment en amont du processus de fabrication. Par conséquent, la quantité de matériau à mettre au rebut en cas de détection de défauts reste élevée.

Un objet du présent exposé est de résoudre le problème précité.

Bien entendu, les points chauds et points humides mentionnés précédemment ne constituent que quelques exemples de défauts localisés au sens du présent exposé. De manière générale, tout défaut et en particulier toute variation locale de la structure de matelas, ou variation locale de coloration, ou variation locale de la concentration en fibres et/ou en eau et/ou en liant au sein du matelas doit être considéré comme compris dans le présent exposé.

Selon le présent exposé, l'objectif précité est atteint grâce avec une installation de traitement d'un matelas de fibres minérales, notamment de fibres de verre ou de fibres de roche, se déplaçant selon un plan et une direction de défilement, par détection et élimination de défauts localisés, notamment des points chauds ou des points humides, l'installation comprenant :
- un premier organe pour le transport du matelas de fibres minérales,
- un deuxième organe pour le transport du matelas de fibres minérales, le deuxième organe de transport étant disposé à la suite du premier organe de transport dans la direction de défilement et séparé de celui-ci dans ladite direction par une zone de traitement,
- un dispositif de détection de défauts localisés dans le matelas de fibres minérales, situé en amont de la zone de traitement dans la direction de défilement, et
- dans la zone de traitement, un dispositif d'élimination de défauts adapté pour éliminer en ligne un défaut détecté par le dispositif de détection, en éliminant la partie de matelas le contenant.

L'élimination des défauts est faite en ligne, autrement dit au cours du transport du matelas de fibres, et sans interruption de ce transport.

L'installation peut ainsi être intégrée dans une installation de fabrication d'un produit à base de fibres minérales, sans que les autres postes de l'installation de fabrication ne nécessitent d'adaptation particulière.

Dans tout le présent exposé, on entend par organe de transport de façon très générale tout organe adapté pour recevoir le matelas de fibres et permettre le déplacement du matelas. Un organe de transport peut par exemple être un convoyeur, un tambour, un tapis de réception ou tout autre dispositif adapté.

Le matelas traité par l'installation de traitement est avantageusement une nappe de fibres minérales encollées à l'aide d'un liant non encore durci, et destinée à la fabrication d'une plaque ou d'un rouleau de laine d'isolation.

Comme alternative, cependant, le matelas traité peut aussi être un matelas de fibres minérales dépourvu de liant. Dans ce cas, le matelas est par exemple issu d'une nappe de fibres préalablement décardée ou non, et forme un amas de fibres sans cohésion. Un tel produit peut être tout type de laine conditionnée en vrac et peut par exemple être utilisé ultérieurement en tant que laine à projeter ou laine à souffler (notamment du type commercialisé sous la marque Insulsafe®).

Bien que le matelas soit réalisé dans un matériau fibreux, on peut globalement définir deux faces principales du matelas. La distance entre ces deux faces principales définit l'épaisseur du matelas.

A partir de ces faces principales, on peut définir localement un plan de défilement du matelas. En tout point du matelas, ce plan de défilement correspond au plan tangent à l'une des faces principales du matelas.

La direction de défilement du matelas est, elle aussi, définie localement.

De préférence, le dispositif d'élimination est configuré de sorte que la partie du matelas contenant le défaut soit évacuée dans une direction d'élimination incidente, c'est-à-dire à travers l'épaisseur du matelas, la direction d'élimination étant avantageusement sensiblement parallèle à la normale au plan de défilement du matelas. Par sensiblement parallèle, on entend ici formant avec cette direction normale un angle compris entre 0 et 45°. On comprend que l'élimination du défaut forme ainsi un trou traversant le matelas de part en part, sur toute son épaisseur.

Selon un exemple, le dispositif de détection est statique, et permet avantageusement d'analyser toute la largeur du matelas, par exemple avec une résolution latérale de l'ordre de 10mm.

Selon un exemple, notamment dans le cas de points chauds, le dispositif de détection est adapté pour balayer la surface du matelas et mesurer ou déduire une température de surface du matelas.

Par exemple, le dispositif de détection comprend au moins un organe de détection par rayonnement infrarouge, notamment un scanner infrarouge.

L'utilisation de rayonnement infrarouge permet de restituer une information caractéristique ou représentative de la température du matelas, sans contact. Un autre avantage est que cette méthode permet de détecter des points chauds de petites dimensions (de l'ordre de 10mm de largeur).

Dans certains cas, et notamment pour la détection de points humides, le dispositif de détection peut, comme alternative, comprendre au moins un dispositif de détection par microondes.

Selon encore un autre exemple de réalisation, notamment pour la détection d'inhomogénéités de coloration du matelas, le dispositif de détection peut comprendre une caméra vidéo.

Les exemples précités ne sont cependant pas limitatifs, et d'autres types de détection pourraient être envisagés comme autres alternatives.

Selon un exemple, le dispositif d'élimination comprend des moyens de pression ou de traction, notamment mécaniques ou pneumatiques, sollicitant une partie du matelas dans une direction d'élimination.

Les moyens de pression selon le présent exposé doivent être entendus comme pouvant comprendre tout élément fluide ou solide adapté pour exercer une force de pression sur le matelas de fibres minérales.

Un moyen de pression peut ainsi non limitativement se présenter sous la forme d'un doigt presseur, ou sous la forme d'un jet de fluide, notamment de l'air ou de l'eau ou de l'huile, sous pression.

Les moyens de traction selon le présent exposé doivent être entendus comme pouvant comprendre tout élément fluide ou solide adapté pour exercer une force de traction sur le matelas de fibres minérales.

Ceci inclut notamment des moyens d'extraction mécaniques tels qu'un crochet inséré dans le matelas puis retiré en exerçant une traction sur le défaut, ou encore des moyens d'aspiration.

Avantageusement, la direction d'application de la force exercée par les moyens de pression ou de traction (qui correspond à la direction d'élimination précitée) forme un angle compris entre 3 et 20°, de préférence entre 3 et 10°, encore plus préférentiellement entre 4 et 6°, avec une normale au plan de défilement. Il a été constaté que ces valeurs d'angle sont avantageuses car elles permettent de découper correctement la nappe sans la déformer.

Le dispositif d'élimination est avantageusement adapté pour éliminer localement la partie de matelas contenant un défaut. En d'autres termes, le dispositif peut être adapté pour éliminer une partie de matelas de largeur inférieure à la largeur du matelas.

Selon un exemple, le dispositif d'élimination comprend une pluralité d'organes de pression ou de traction, orientés vers la zone de traitement, et répartis dans une direction latérale de l'installation.

On peut définir localement une direction latérale de l'installation comme une direction orthogonale à la direction de défilement du matelas et parallèle au plan de défilement au même point.

Cette direction latérale est généralement parallèle aux faces principales des organes de transport, avec lesquelles le matelas est destiné à venir en contact.

On comprend que des organes de pression ou de traction sont ainsi répartis, de préférence régulièrement, sur toute la largeur du matelas de fibres, dans la zone de traitement.

Avantageusement, ces organes sont alors adaptés pour être commandés indépendamment les uns des autres (i.e. sélectivement).

De façon avantageuse, l'installation comprend des moyens de transmission pour transmettre au dispositif d'élimination une information sur le positionnement du défaut dans la direction latérale, et des moyens de commande sélective de chaque organe de pression ou de traction en fonction de ladite information. Il est ainsi possible de n'actionner que le ou les organes de pression ou de traction situés directement en regard de la partie du matelas contenant le défaut détecté, lors du passage du matelas dans la zone de traitement. Grâce à ces dispositions, et en multipliant les organes de pression ou de traction, il est possible de réduire le volume de matelas évacué au minimum nécessaire.

Selon un exemple, l'espacement entre le premier organe de transport et le deuxième organe de transport est compris entre 50 et 150mm, de préférence entre 80 et 120 mm. Cette distance est suffisante pour éliminer les points chauds de taille conséquente (diamètre maximal supérieur à 80mm), mais permet néanmoins de maintenir la continuité de défilement du matelas (pas d'effondrement du matelas entre les deux organes de transport).

L'espacement entre le premier organe de transport et le deuxième organe de transport est ici considéré comme la distance séparant le point extrême de la face principale du premier organe de transport (point au-delà duquel le matelas n'est plus en contact avec le premier convoyeur, dans la direction de défilement) et le point extrême de la face principale du deuxième organe de transport (point avant lequel le matelas n'est plus en contact avec le deuxième convoyeur, dans la direction de défilement), dans la direction de défilement.

Selon un exemple, l'installation comprend en outre, dans la zone de traitement, au moins une trappe adaptée pour être ouverte et fermée de façon commandée sous le matelas de fibres minérales. De façon avantageuse, la trappe forme une surface de transport pour le matelas de fibres minérales, entre le premier et le deuxième organe de transport et dans la continuité directe de ces deux organes de transport.

Cette disposition peut notamment être envisagée dans le cas où le matelas de fibres minérales est un matelas de fibres non liées par un liant. Dans ce cas, le matelas est constitué d'un amas de fibres sans cohésion entre elles, qui nécessite, d'être déplacé sur un support continu. La trappe forme à la fois ce support et le dispositif d'élimination : lorsque la trappe est ouverte, les fibres situées sur la trappe tombent par gravité et sont ainsi évacuées.

Le présent exposé concerne également une ligne de fabrication d'un produit à base de fibres minérales, notamment de fibres de verre ou de fibres de roche, comprenant au moins :
- un dispositif de fibrage pour l'obtention de fibres minérales,
- un dispositif de pulvérisation d'un liant sur lesdites fibres minérales, pour la formation d'un matelas de fibres minérales liées par un liant, et
- un dispositif de réticulation du liant,
dans laquelle la ligne de fabrication comprend en outre, entre le dispositif de pulvérisation et le dispositif de réticulation du liant, une installation de traitement telle que définie précédemment.

Selon un exemple, la ligne de fabrication comprend en outre un dispositif de nappage du matelas de fibres, entre l'installation de traitement et le dispositif de réticulation du liant.

La détection des défauts en amont du nappage présente plusieurs avantages : la détection se fait sur un matelas de plus faible grammage, et est de ce fait plus fiable, et d'autre part l'élimination du défaut n'impacte pas la qualité du produit final, puisque le trou résultant de l'élimination d'une partie du matelas est recouvert par les épaisseurs de fibres nappées.

Selon un exemple, la ligne de fabrication comprend en outre un dispositif de crêpage, entre l'installation de traitement et le dispositif de réticulation du liant. La technique de crêpage, connue en soi, consiste à produire un ralentissement pendant le trajet du matelas dans la ligne, afin de réaliser une accumulation des fibres qui densifie la structure du matelas. L'opération de crêpage permet également de compenser le manque local de fibres au niveau de la partie de matelas évacuée, en réarrangeant les fibres. A cet égard, selon l'invention, le crêpage peut être déclenché uniquement en réponse à l'élimination d'un défaut

Le présent exposé concerne encore un procédé de traitement d'un matelas de fibres minérales, notamment de fibres de verre ou de fibres de roche, se déplaçant selon se déplaçant selon un plan et une direction de défilement une direction de défilement, par détection et élimination de défauts localisés, notamment des points chauds, comprenant :
- le transport du matelas de fibres minérales sur un premier organe de transport, puis sur un deuxième organe de transport disposé à la suite du premier organe de transport et séparé de celui-ci par une zone de traitement dans la direction de défilement,
- la détection de défauts localisés dans le matelas de fibres minérales, en amont de la zone de traitement dans la direction de défilement, et
- dans la zone de traitement, l'élimination en ligne d'un défaut détecté par suppression de la partie de matelas le contenant.

De préférence, la partie du matelas contenant le défaut est éliminée dans une direction d'élimination sensiblement parallèle à la normale au plan de défilement du matelas.

Selon un exemple, l'élimination de la partie de matelas contenant le défaut est réalisée en sollicitant ladite partie dans une direction d'élimination par des moyens de pression ou de traction.

Selon un exemple, le matelas de fibres minérales est une nappe de fibres minérales liées par un liant.

Selon un exemple, le matelas de fibres minérales est un matelas de fibres minérales non liées par un liant.

Selon un exemple, la détection de défauts localisés comprend l'utilisation de rayonnement infrarouge.

Le présent exposé concerne enfin un procédé de fabrication d'un produit à base de fibres minérales liées par un liant, notamment de fibres de verre ou de fibres de roche, comprenant au moins :
- l'obtention de fibres minérales,
- la pulvérisation d'un liant sur lesdites fibres minérales, pour la formation d'un matelas de fibres minérales liées par un liant, et
- la réticulation du liant,
le procédé comprenant en outre, entre la pulvérisation et la réticulation du liant, le traitement du matelas de fibres minérales par détection et élimination de défauts localisés, notamment des points chauds ou des points humides, selon le procédé de traitement tel que défini précédemment.

Selon un exemple de mise en œuvre, le procédé de fabrication comprend en outre le nappage du matelas de fibres minérales, entre le traitement et la réticulation du liant.

Selon un exemple de mise en œuvre, le procédé de fabrication comprend en outre le crêpage du matelas de fibres minérales, entre le traitement et la réticulation du liant.

L'invention dans ses détails sera mieux comprise à la lecture de la description qui suit d'un mode de réalisation de la présente installation de traitement au sein d'une ligne de fabrication d'un produit à base de fibres minérales. Dans le cadre de la présente invention, d'autres modes de réalisation sont bien entendu possibles, la description qui suit étant uniquement fournie à titre d'illustration et ne devant être considérée comme limitative sous aucun de ses aspects décrits.
La figure 1 illustre une installation de détection et d'élimination de défauts selon un mode de réalisation de la présente invention.
La figure 2 est une vue en coupe selon le plan II de la figure 1.
La figure 3 illustre l'élimination de la partie de matelas contenant le défaut M, avec l'installation de traitement des figures 1 et 2.
La figure 4 est une représentation schématique d'une ligne de fabrication d'un produit à base de fibres de roche, intégrant une installation de traitement selon l'invention.

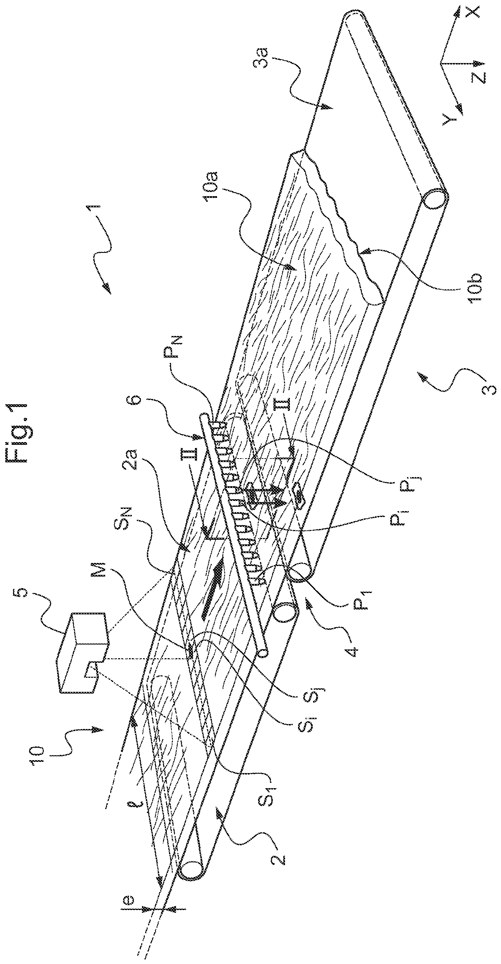

Sur la figure 1 est illustrée une installation 1 de traitement d'un matelas de fibres minérales 10, par exemple de fibres de roche, se déplaçant selon une direction de défilement X, par détection et élimination de défauts localisés M, notamment des points chauds.

L'installation de traitement 1 comprend :
- un premier organe de transport 2
- un deuxième organe de transport 3, disposé à la suite du premier organe de transport 2 dans la direction X de défilement du matelas et séparé de celui-ci dans ladite direction X par une zone de traitement 4,
- un dispositif 5 de détection de défauts localisés dans le matelas de fibres minérales, situé en amont de la zone de traitement 4 dans la direction de défilement X, et
- dans la zone de traitement 4, un dispositif 6 d'élimination de défauts M adapté pour éliminer en ligne les défauts M détectés par le dispositif de détection 5, par élimination des parties du matelas 10 les contenant.

Le premier et le deuxième organe de transport 2, 3 sont ici des bandes sans fin montées autour d'axes parallèles, et entraînées par un moteur. Chacun comprend une face principale respectivement 2a, 3a, ici supérieure, destinée à venir en contact avec le matelas de fibres minérales 10, et, plus particulièrement, à supporter ce matelas de fibres minérales 10. Il peut s'agir de manière équivalente de convoyeurs à chaînes ou à trains de rouleaux.

Les faces principales 2a, 3a du premier et du deuxième convoyeur sont planes (bien que cela ne soit aucunement limitatif). Elles peuvent être situées dans un même plan, comme illustré sur les figures 1 à 3, ou peuvent éventuellement être inclinées l'une par rapport à l'autre.

Le premier et le deuxième convoyeur 2, 3 sont espacés l'un de l'autre, et séparés, dans la direction de défilement X du matelas, par la zone de traitement 4.

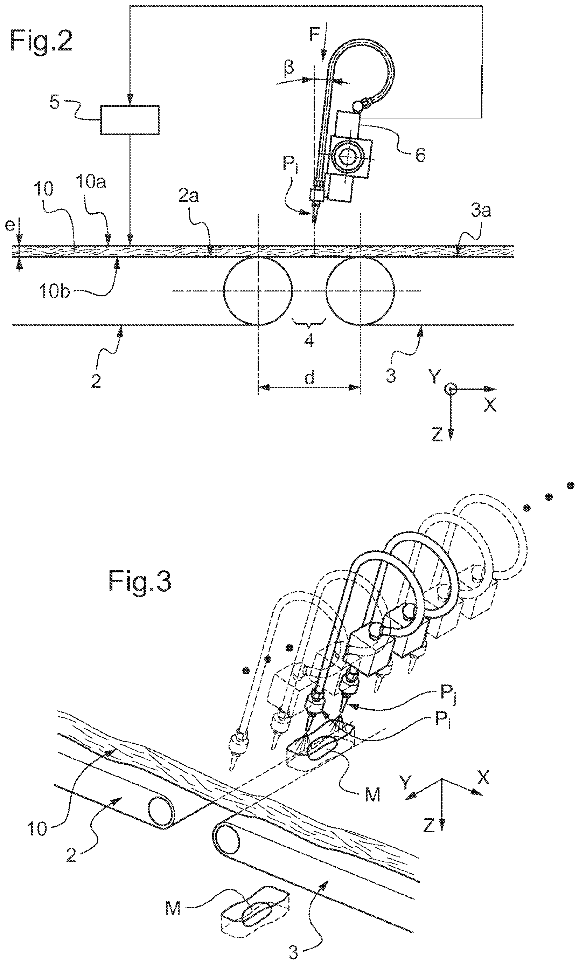

L'espacement entre le premier organe de transport et le deuxième organe de transport, référencé d sur la figure 2, correspond à la distance séparant la face principale 2a du premier convoyeur 2 et la face principale 3a du deuxième convoyeur 3, dans la direction de défilement X. Cet espacement d est avantageusement compris entre 50 et 150mm, de préférence entre 80 et 120 mm.

Le matelas de fibres 10 est ici une nappe de fibres de roche encollées à l'aide d'un liant non encore durci, et destinée à la fabrication d'une plaque ou d'un rouleau de laine d'isolation (ci-après nappe).

Le matelas 10 se présente globalement sous la forme d'un ruban continu présentant deux faces principales 10a, 10b parallèles, dont l'une (10b) est ici au contact des convoyeurs 2, 3. Le matelas présente une largeur 1 et une épaisseur e, telles qu'illustrées sur la figure 1.

La largeur l du matelas 10 est par exemple comprise entre 1000 et 4000 mm. Son épaisseur e est typiquement comprise entre 10 et 30 mm. Le grammage du matelas est par exemple compris entre 300 et 500g/m².

Comme expliqué précédemment, on définit en tout point du matelas un plan de défilement tangent à l'une de ses faces principales 10a, 10b.

On définit par ailleurs localement une direction latérale Y comme la direction orthogonale à la direction de défilement X du matelas et parallèle audit plan de défilement au même point.

Le dispositif de détection de défauts 5 est, dans l'exemple, un scanner infrarouge situé au-dessus du premier convoyeur 2, autrement dit en amont de la zone de traitement 4.

Le scanner 5 est ici statique, et présente un champ de vision balayant au moins toute la largeur 1 de la nappe dans la direction latérale.

Son champ de vision est divisé, dans la direction latérale, en N sections S1, ..., Sn, ..., SN, préférentiellement de largeur constante (inférieure ou égale à 1/N).

Le scanner 5 est adapté pour restituer à chaque instant une information caractéristique ou représentative de la température de surface du matelas dans les N sections précitées de son champ de vision. Si la température mesurée dans l'une ou plusieurs de ces sections à un instant t est considérée comme supérieure à un seuil prédéterminé (par exemple 250°C ou 300°C ou 350°C), une information correspondante, comprenant les coordonnées X et Y de la ou les section(s) concernées (respectivement dans les directions de défilement et latérale), est transmise au dispositif d'élimination 6.

Le dispositif d'élimination 6 est situé en aval du dispositif de détection 5, dans la direction de défilement X.

Plus précisément, le dispositif d'élimination 6 est situé entre le premier et le deuxième organe de transport 2, 3.

Il comprend, dans l'exemple, N organes de pression P1, ..., Pn, ..., PN, orientés vers la zone de traitement 4, autrement dit vers la portion de la nappe 10 située dans l'espace séparant le premier et le deuxième organe de transport 2, 3.

Dans l'exemple particulier représenté, les N organes de pression P sont des buses à air comprimé, pilotées par électrovannes, en fonction notamment des informations transmises par le dispositif de détection 5.

Selon une disposition avantageuse, chaque buse est une buse dite amplificatrice, c'est-à-dire entraînant dans son fonctionnement de l'air ambiant induit. La consommation d'air pour une force de soufflage donnée est ainsi réduite. Aussi, ce type de buse peut être utilisée à la pression standard d'un réseau d'air comprimé, typiquement entre 5 et 6 bars, et ne nécessite pas l'ajout d'un surpresseur.

A titre d'exemple, il a été constaté qu'une buse dont la force de soufflage (= force maximum exercée sur une balance située à 150 mm de la buse, lors du soufflage) est supérieure ou égale à 22 N, est particulièrement adaptée pour une nappe de fibre de grammage compris entre 300 et 500g/m², espacée de la buse d'une distance comprise entre 50 et 200 mm, de préférence entre 80 et 100 mm.

Les organes de pression P peuvent être commandés de manière sélective, en fonction du positionnement exact du défaut M, dans la direction latérale Y et dans la direction de défilement X Par exemple, une seule buse peut être actionnée pour éliminer un défaut de faibles dimensions. Dans d'autres cas, plusieurs buses adjacentes les unes aux autres peuvent être actionnées simultanément, pour élargir la largeur de la matière enlevée. Sur la figure 1, on a représenté un défaut M s'étendant sur deux sections Si et Sj traitées par le scanner 5.

Le temps t entre la détection du défaut et le pilotage des électrovannes est paramétré par avance, en fonction de la vitesse de défilement du matelas 10, de sorte que le jet d'air provenant des buses P rencontre les parties du matelas contenant le défaut M au moment de leur passage dans la zone de traitement 4, et que ces parties soient évacuées, sous l'effet de la pression de l'air.

La durée d'actionnement des buses P, dépend, elle, des coordonnées X du défaut détecté. Si ce défaut s'étend sur une longueur donnée du matelas, dans la direction de défilement, la durée d'ouverture de la ou les électrovannes est ajustée en conséquence.

De préférence, et comme illustré plus en détail sur la figure 2, les buses Pi sont positionnées de sorte que la direction d'application du soufflage F soit légèrement inclinée par rapport à la normale Z au plan de défilement.

Selon une disposition avantageuse, la direction de soufflage (direction de la force de pression exercée par chaque buse en direction du matelas) forme un angle beta (β) compris entre 3 et 20°, de préférence entre 3 et 10°, encore plus préférentiellement entre 4 et 6° (par exemple 5°) avec la normale (Z) au plan de défilement du matelas. Il a été constaté que ces valeurs d'angle sont avantageuses car elles permettent de découper correctement la nappe sans la déformer.

Sur la figure 3, on a représenté l'élimination de la partie du matelas 10 contenant le défaut M, grâce aux buses Pi, Pj. La partie de matelas, soumise à la force de pression exercée par les deux buses se détache du matelas et forme dans celui-ci un trou localisé, traversant toute l'épaisseur du matelas, sans endommager les parties adjacentes. La partie de matelas défectueuse passe entre les convoyeurs et est récupérée sous le matelas, par exemple dans un récipient de récupération, afin de pouvoir être traitée (par exemple recyclée après avoir été refroidie, dans le cas de points chauds).

L'installation de traitement 1 décrite ci-dessus n'est donnée qu'à titre d'exemple et n'est évidemment pas limitative de la présente invention.

Ainsi, par exemple, les moyens de pression pourraient être des moyens mécaniques de pression, typiquement sous la forme de N doigts de pression, pouvant être actionnés sélectivement.

Aussi, le dispositif d'élimination peut comporter des organes de traction, par exemple des organes mécaniques du type crochets d'extraction ou des dispositifs d'aspiration, en lieu et place des organes de pression précités, ou encore une combinaison de ces deux types d'organes.

Egalement, le positionnement relatif du premier et du deuxième organe de transport peut être différent de celui illustré sur les figures 1 à 3. Si, dans la plupart des cas, les premier et deuxième organes de transport sont situés l'un à la suite de l'autre, ils peuvent, comme variante, être superposés ou encore former entre eux un angle, par exemple un angle de 90°.

Enfin, le matelas traité peut être un matelas de fibres minérales dépourvu de liant. Dans ce cas, le matelas est par exemple issu d'une nappe de fibres éventuellement préalablement décardée, et forme un amas de fibres sans cohésion. Un tel produit peut être utilisé ultérieurement en tant que laine à souffler ou pour fabriquer de la laine à projeter.

Dans ce cas, le matelas ne peut pas se déplacer entre le premier et le deuxième organe de transport sans élément de support. Cet élément de support peut alors avantageusement être constitué par au moins une trappe adaptée pour être ouverte et fermée de façon commandée sous le matelas de fibres minérales. On comprend que la trappe forme alors une surface de transport pour le matelas de fibres minérales, entre le premier et le deuxième organe de transport et dans la continuité directe de ces deux organes de transport. Lorsque la trappe est ouverte, les fibres situées sur la trappe tombent, soit uniquement sous l'effet de la gravité (en l'absence de moyens de pression ou de traction), soit sous l'effet combiné de la gravité et de moyens de pression ou de traction du type décrit précédemment, et sont ainsi évacuées.

Evidemment, afin de limiter la quantité de matelas éliminé, l'installation peut avantageusement comporter une pluralité de trappes réparties dans la direction de la largeur de l'installation, et les trappes peuvent être actionnées sélectivement (indépendamment les unes des autres), selon le positionnement exact du défaut détecté.

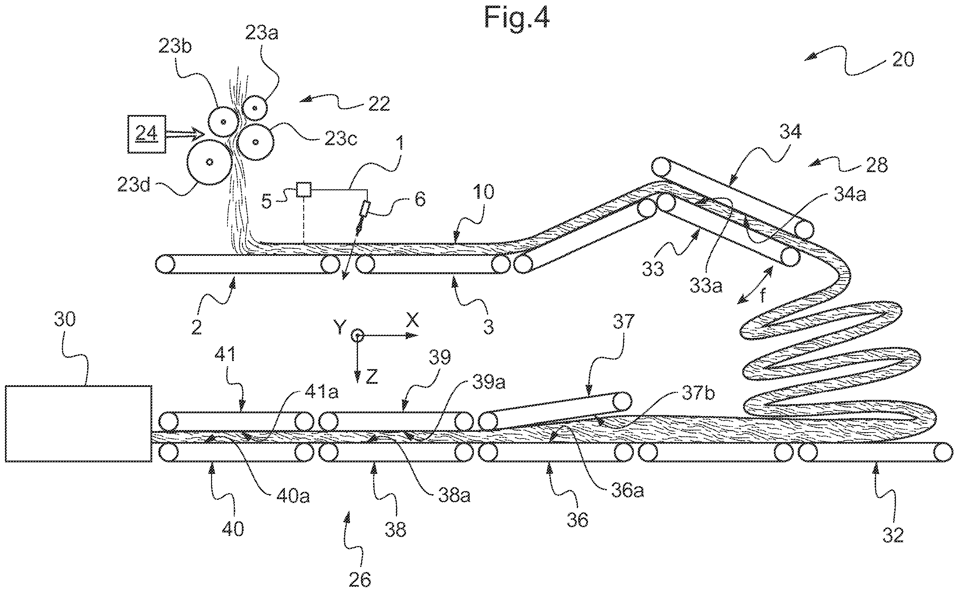

La figure 4 représente schématiquement une ligne 20 de fabrication d'un produit en laine de roche, comprenant une installation de traitement selon l'invention, notamment du type décrit précédemment en lien avec les figures 1 et 2.

La ligne de fabrication 20 comprend, de l'amont vers l'aval, les éléments suivants :
- un dispositif de fibrage 22 pour l'obtention de fibres de roche,
- un dispositif (intégré à la machine de fibrage) de pulvérisation de liant 24 sur les fibres de roche ainsi obtenues,
- une installation 1 de traitement du matelas de fibres issu des dispositifs de fibrage et de pulvérisation par détection et élimination de défauts localisés, du type décrit précédemment en liaison avec les figures 1 et 2,
- un dispositif de nappage ou nappeur 28, et
- une étuve de réticulation du liant 30.

De manière connue, le dispositif de fibrage 22 comporte une série de quatre roues de centrifugation 23a, 23b, 23c, 23d agencées en cascade, capables de tourner autour d'axes sensiblement horizontaux, dans lesquelles la première roue est la plus petite 23a, la deuxième roue 23b est légèrement plus grande, les troisième et quatrième roues 23c, 23d étant très légèrement plus grandes et sensiblement de même diamètre.

La première roue 23a est alimentée en matériau fondu par une goulotte (non représentée) et sert essentiellement à accélérer le matériau qui est renvoyé vers la seconde roue 23b, le flux de matériau s'amenuisant à chaque roue à raison de la quantité de fibres formées.

Un tel dispositif de fibrage 22 comprend généralement en outre des moyens pour générer, à la périphérie des roues de centrifugation, un courant d'air sensiblement parallèle aux axes de rotation des roues, dans le but d'assister la formation des fibres par un effet d'étirage et d'entraîner les fibres dans une direction perpendiculaire à leur direction de formation.

Un liant est pulvérisé sur les fibres par le dispositif de pulvérisation 24 alimenté par des moyens dédiés en solution de liant. Le matelas de fibres 10 est ensuite formé par l'accumulation des fibres sur une surface de réception et acheminé dans la ligne par un organe de transport, jusqu'à l'installation de traitement 1, selon l'invention, pour la détection et l'élimination éventuelle de défauts localisés, du type points chauds.

Il est ensuite transporté jusqu'au nappeur 28.

Le nappeur 28 est adapté pour déposer les fibres minérales sur un convoyeur 32, sous forme de plusieurs couches superposées. Le grammage du matelas de fibres est ainsi augmenté, ce qui permet d'obtenir un produit d'isolation avec des propriétés thermiques et/ou acoustiques améliorées. Dans un souci de simplification le convoyeur 32 est représenté sur la figure 4 en alignement avec la direction de convoyage X, alors qu'il est en réalité orienté perpendiculairement selon la direction Y.

Le nappeur 28 est typiquement vertical. Il comprend deux tapis 33, 34 avec des surfaces principales 33a, 34a, destinées à être en contact avec les fibres minérales, qui sont parallèles et se font face. Les deux tapis 33, 34 se déplacent à la même vitesse et entraînent les fibres entre eux, contre leurs faces principales. Les deux tapis 33, 34 oscillent ensemble autour d'un axe horizontal parallèle à leurs surfaces principales, comme illustré par la flèche f sur la figure 1.

L'installation comprend de préférence également un dispositif de crêpage 26 aussi appelé crêpeuse, positionné en aval du nappeur 28, et qui permet d'augmenter la densité et d'orienter les fibres minérales. La crêpeuse 26 comprend typiquement six tapis 36, 37, 38, 39, 40, 41 répartis en trois paires successives de tapis disposés en regard. Chaque tapis comporte une surface principale respectivement 36a, 37a, 38a, 39a, 40a, 41a, destinée à être en contact avec les fibres minérales.

Les tapis 36 et 37 de la première paire se déplacent à la même vitesse. Les tapis 38 et 39 de la deuxième paire se déplacent à la même vitesse (différente des tapis de la première paire). Les tapis 40 et 41 de la troisième paire se déplacent à la même vitesse (différente des tapis de la première et la deuxième paire).

Les opérations de crêpage et de nappage contribuent toutes les deux à réparer le trou pratiqué dans le matelas résultant de l'élimination d'une partie défectueuse. Ainsi, la qualité ou l'esthétique du produit final ne sont pas impactées par l'opération de traitement.

Le matelas de fibres est ensuite calibré et transporté jusqu'à l'étuve 30, dont la température est par exemple proche de 220°C. La montée en température et le temps de séjour du matelas fibreux dans l'étuve 30 sont ajustés pour permettre la cuisson du liant et l'élimination de l'eau. En sortie de l'étuve 30, le matelas de fibres subit typiquement, à l'aide de dispositifs de découpe, une découpe longitudinale de ses bords irréguliers, et éventuellement du centre, une découpe dans un sens transversal et éventuellement dans le sens de l'épaisseur (refente), de manière à obtenir des blocs qui pourront ensuite être stockés sous forme de plaques ou en rouleau.

## Revendications

1. Installation (1) de traitement d'un matelas de fibres minérales (10), notamment de fibres de verre ou de fibres de roche, se déplaçant selon un plan (X, Y) et une direction de défilement (X), par détection et élimination de défauts localisés (M), notamment des points chauds ou des points humides, l'installation comprenant :
- un premier organe (2) pour le transport du matelas de fibres minérales (10),
- un deuxième organe (3) pour le transport du matelas de fibres minérales (10), le deuxième organe de transport (3) étant disposé à la suite du premier organe de transport (2) dans la direction de défilement (X) et séparé de celui-ci dans ladite direction par une zone de traitement (4),
- un dispositif (5) de détection de défauts (M) localisés dans le matelas de fibres minérales, situé en amont de la zone de traitement (4) dans la direction de défilement (X), et
- dans la zone de traitement (4), un dispositif (6) d'élimination de défauts adapté pour éliminer en ligne, c'est-à-dire au cours du transport du matelas de fibres minérales et sans interruption de ce transport, un défaut (M) détecté par le dispositif de détection (5) en éliminant la partie de matelas le contenant.

2. Installation de traitement (1) selon la revendication 1, dans laquelle le dispositif de détection (5) comprend au moins un organe de détection par rayonnement infrarouge.

3. Installation de traitement (1) selon la revendication 1 ou 2, dans laquelle le dispositif d'élimination est configuré de sorte que la partie de matelas contenant le défaut soit évacuée dans une direction d'élimination traversant l'épaisseur du matelas.

4. Installation de traitement (1) selon l'une quelconque des revendications 1 à 3, dans laquelle le dispositif d'élimination (6) est configuré de sorte que la partie du matelas contenant le défaut soit évacuée dans une direction d'élimination (F) sensiblement parallèle à la normale (Z) au plan (X,Y) de défilement du matelas.

5. Installation de traitement (1) selon l'une quelconque des revendications 1 à 4, dans laquelle le dispositif d'élimination (6) comprend des moyens de pression ou de traction (P) sollicitant une partie du matelas dans une direction d'élimination (F).

6. Installation de traitement (1) selon la revendication 5, dans laquelle la direction d'application de la force exercée par les moyens de pression ou de traction forme un angle compris entre 3 et 20°, de préférence entre 3 et 10°, encore plus préférentiellement entre 4 et 6°, avec une direction normale (Z) au plan (X,Y) de défilement

7. Installation de traitement (1) selon la revendication 5 ou 6, dans laquelle le dispositif d'élimination (6) comprend une pluralité d'organes de pression ou de traction (P), orientés vers la zone de traitement (4), et répartis dans une direction latérale (Y) de l'installation.

8. Installation de traitement (1) selon la revendication 7, comprenant en outre des moyens de transmission pour transmettre au dispositif d'élimination (6) une information sur le positionnement du défaut (M) dans la direction latérale (Y), et des moyens de commande sélective de chaque organe de pression ou de traction (P) en fonction de ladite information.

9. Installation de traitement (1) selon l'une quelconque des revendications 1 à 8, dans laquelle l'espacement (d) entre la première surface de transport du premier organe de transport et la deuxième surface de transport du deuxième organe de transport est compris entre 50 et 150 mm, de préférence entre 80 et 120 mm.

10. Installation de traitement (1) selon l'une quelconque des revendications 1 à 9, comprenant en outre, dans la zone de traitement, au moins une trappe adaptée pour être ouverte et fermée de façon commandée sous le matelas de fibres minérales (10).

11. Ligne de fabrication (20) d'un produit à base de fibres minérales, notamment de fibres de verre ou de fibres de roche, comprenant au moins :
- un dispositif de fibrage (22) pour l'obtention de fibres minérales,
- un dispositif de pulvérisation d'un liant (24) sur lesdites fibres minérales, pour la formation d'un matelas de fibres minérales liées par un liant (10), et
- un dispositif de réticulation du liant (30),
dans laquelle la ligne de fabrication (20) comprend en outre, entre le dispositif de pulvérisation (24) et le dispositif de réticulation du liant (30), une installation de traitement (1) selon l'une quelconque des revendications 1 à 10.

12. Ligne de fabrication (20) selon la revendication 11, comprenant en outre un dispositif de nappage (28) du matelas de fibres (10), entre l'installation de traitement (1) et le dispositif de réticulation du liant (30).

13. Ligne de fabrication (20) selon la revendication 11 ou 12, comprenant en outre un dispositif de crêpage (26), entre l'installation de traitement (1) et le dispositif de réticulation du liant (30).

14. Procédé de traitement d'un matelas de fibres minérales (10), notamment de fibres de verre ou de fibres de roche, se déplaçant selon un plan (X, Y) et une direction de défilement (X), par détection et élimination de défauts localisés (M), notamment des points chauds ou des points humides, au moyen d'une installation selon l'une quelconque des revendications 1 à 10, le procédé comprenant :
- le transport du matelas de fibres minérales (M) sur un premier organe de transport (2), puis sur un deuxième organe de transport (3) disposé à la suite du premier organe de transport (2) et séparé de celui-ci par une zone de traitement (4) dans la direction de défilement (X),
- la détection de défauts localisés (M) dans le matelas de fibres minérales (10), en amont de la zone de traitement (4) dans la direction de défilement (X), et
- dans la zone de traitement (4), l'élimination en ligne, c'est-à-dire au cours du transport du matelas de fibres minérales et sans interruption de ce transport, d'un défaut (M) détecté par élimination de la partie de matelas le contenant.

15. Procédé de traitement selon la revendication 14, dans lequel la partie de matelas contenant le défaut est évacuée dans une direction d'élimination traversant l'épaisseur du matelas.

16. Procédé de traitement selon la revendication 14 ou 15, dans lequel le matelas de fibres minérales est une nappe de fibres minérales liées par un liant non durci.

17. Procédé de traitement selon la revendication 14 ou 15, dans lequel le matelas de fibres minérales est un matelas de fibres minérales non liées par un liant.

18. Procédé de fabrication d'un produit à base de fibres minérales liées par un liant, notamment de fibres de verre ou de fibres de roche, comprenant au moins :
- l'obtention de fibres minérales,
- la pulvérisation d'un liant sur lesdites fibres minérales, pour la formation d'un matelas de fibres minérales liées par un liant (10), et
- la réticulation du liant,
le procédé comprenant en outre, entre la pulvérisation et la réticulation du liant, le traitement du matelas de fibres minérales (10) par détection et élimination de défauts localisés, notamment des points chauds ou des points humides, selon le procédé de traitement de la revendication 14.

## Patentansprüche

1. Vorrichtung (1) zur Behandlung einer Mineralfasermatte (10), insbesondere aus Glasfasern oder aus Steinfasern, die sich in einer Ebene (X, Y) und einer Laufrichtung (X) bewegt, durch Erkennung und Beseitigung von lokalisierten Defekten (M), insbesondere von heißen Stellen oder feuchten Stellen, wobei die Vorrichtung Folgendes umfasst:
- ein erstes Element (2) zum Transportieren der Mineralfasermatte (10),
- ein zweites Element (3) zum Transportieren der Mineralfasermatte (10), wobei das zweite Transportelement (3) in der Laufrichtung (X) hinter dem ersten Transportelement (2) angeordnet und in dieser Richtung durch eine Behandlungszone (4) von diesem getrennt ist,
- eine Einheit (5) zur Erkennung von lokalisierten Defekten (M) in der Mineralfasermatte, die sich in der Laufrichtung (X) vor der Behandlungszone (4) befindet, und
- eine Einheit (6) zur Beseitigung von Defekten in der Behandlungszone (4), die geeignet ist, in der Linie, d. h. während des Transports der Mineralfasermatte und ohne Unterbrechung dieses Transports, einen von der Erkennungseinheit (5) erkannten Defekt (M) zu beseitigen, indem sie den Teil der Matte, der diesen enthält, beseitigt.

2. Behandlungsvorrichtung (1) nach Anspruch 1, wobei die Erkennungseinheit (5) mindestens ein Infrarotstrahlungserkennungselement umfasst.

3. Behandlungsvorrichtung (1) nach Anspruch 1 oder 2, wobei die Beseitigungseinheit so konfiguriert ist, dass der Teil der Matte, der den Defekt enthält, in einer Beseitigungsrichtung, die die Dicke der Matte durchquert, zu entfernen.

4. Behandlungsvorrichtung (1) nach einem der Ansprüche 1 bis 3, wobei die Beseitigungseinheit (6) so konfiguriert ist, dass der Teil der Matte, der den Defekt enthält, in einer Beseitigungsrichtung (F) im Wesentlichen parallel zur Normalen (Z) zur Ebene (X, Y) des Mattenlaufs entfernt wird.

5. Behandlungsvorrichtung (1) nach einem der Ansprüche 1 bis 4, wobei die Beseitigungseinheit (6) Druck- oder Zugmittel (P) umfasst, die einen Teil der Matte in eine Beseitigungsrichtung (F) vorspannen.

6. Behandlungsvorrichtung (1) nach Anspruch 5, wobei die Anlegungsrichtung der durch die Druck- oder Zugmittel ausgeübten Kraft einen Winkel im Bereich zwischen 3 und 20°, vorzugsweise zwischen 3 und 10°, noch mehr bevorzugt zwischen 4 und 6°, mit einer Normalrichtung (Z) zur Ebene (X, Y) des Laufs bildet

7. Behandlungsvorrichtung (1) nach Anspruch 5 oder 6, wobei die Beseitigungseinheit (6) eine Vielzahl von Druck- oder Zugelementen (P) umfasst, die auf die Behandlungszone (4) gerichtet und in einer seitlichen Richtung (Y) der Vorrichtung verteilt sind.

8. Behandlungsvorrichtung (1) nach Anspruch 7, ferner umfassend Übertragungsmittel zum Übertragen von Informationen über die Positionierung des Defekts (M) in der seitlichen Richtung (Y) an die Beseitigungseinheit (6) und Mittel zur selektiven Steuerung jedes Druck- oder Zugelements (P) in Abhängigkeit von diesen Informationen.

9. Behandlungsvorrichtung (1) nach einem der Ansprüche 1 bis 8, wobei der Abstand (d) zwischen der ersten Transportoberfläche des ersten Transportelements und der zweiten Transportoberfläche des zweiten Transportelements im Bereich zwischen 50 und 150 mm, vorzugsweise zwischen 80 und 120 mm, liegt.

10. Behandlungsvorrichtung (1) nach einem der Ansprüche 1 bis 9, ferner umfassend mindestens eine Klappe in der Behandlungszone, die geeignet ist, um unter der Mineralfasermatte (10) auf gesteuerte Weise geöffnet und geschlossen zu werden.

11. Produktionslinie (20) für ein Produkt auf Basis von Mineralfasern, insbesondere aus Glasfasern oder aus Steinfasern, umfassend mindestens:
- eine Faserzieheinheit (22) zur Gewinnung von Mineralfasern,
- eine Einheit zum Sprühen eines Bindemittels (24) auf die Mineralfasern, um eine Matte aus Mineralfasern (10) zu bilden, die durch ein Bindemittel gebunden sind, und
- eine Einheit zum Vernetzen des Bindemittels (30), wobei die Produktionslinie (20) ferner zwischen der Sprüheinheit (24) und der Bindemittelvernetzungseinheit (30) eine Behandlungsvorrichtung (1) nach einem der Ansprüche 1 bis 10 umfasst.

12. Produktionslinie (20) nach Anspruch 11, ferner umfassend eine Einheit zum Beschichten (28) der Fasermatte (10) zwischen der Behandlungsvorrichtung (1) und der Bindemittelvernetzungseinheit (30).

13. Produktionslinie (20) nach Anspruch 11 oder 12, ferner umfassend eine Kreppeinheit (26) zwischen der Behandlungsvorrichtung (1) und der Bindemittelvernetzungseinheit (30).

14. Verfahren zur Behandlung einer Mineralfasermatte (10), insbesondere aus Glasfasern oder aus Steinfasern, die sich in einer Ebene (X, Y) und einer Laufrichtung (X) bewegt, durch Erkennung und Beseitigung von lokalisierten Defekten (M), insbesondere von heißen Stellen oder feuchten Stellen, mittels einer Vorrichtung nach einem der Ansprüche 1 bis 10, wobei das Verfahren Folgendes umfasst:
- das Transportieren der Mineralfasermatte (M) auf einem ersten Transportelement (2) und anschließend auf einem zweiten Transportelement (3), das hinter dem ersten Transportelement (2) angeordnet und von diesem durch eine Behandlungszone (4) in der Laufrichtung (X) getrennt ist,
- die Erkennung von lokalisierten Defekten (M) in der Mineralfasermatte (10) in der Laufrichtung (X) vor der Behandlungszone (4) und
- in der Behandlungszone (4), die Beseitigung in der Linie, d. h. während des Transports der Mineralfasermatte und ohne Unterbrechung dieses Transports, eines erkannten Defekts (M) durch Beseitigung des Teils der Matte, der diesen enthält.

15. Verfahren zur Behandlung nach Anspruch 14, wobei der Teil der Matte, der den Defekt enthält, in einer Beseitigungsrichtung, die die Dicke der Matte durchquert, entfernt wird.

16. Verfahren zur Behandlung nach Anspruch 14 oder 15, wobei die Mineralfasermatte eine Bahn aus Mineralfasern ist, die durch ein ungehärtetes Bindemittel gebunden sind.

17. Verfahren zur Behandlung nach Anspruch 14 oder 15, wobei die Mineralfasermatte eine Matte aus Mineralfasern ist, die nicht durch ein Bindemittel gebunden sind.

18. Verfahren zur Produktion eines Produkts auf Basis von Mineralfasern, die durch ein Bindemittel gebunden sind, insbesondere aus Glasfasern oder aus Steinfasern, umfassend mindestens:
- die Gewinnung von Mineralfasern,
- das Sprühen eines Bindemittels auf die Mineralfasern zur Bildung einer Matte aus Mineralfasern, die durch ein Bindemittel (10) gebunden sind, und
- das Vernetzen des Bindemittels, wobei das Verfahren ferner zwischen dem Sprühen und dem Vernetzen des Bindemittels die Behandlung der Mineralfasermatte (10) durch Erkennung und Beseitigung von lokalisierten Defekten, insbesondere von heißen Stellen oder von feuchten Stellen, gemäß dem Verfahren zur Behandlung nach Anspruch 14 umfasst.

## Claims

1. An apparatus (1) for treating a mat of mineral fibers (10), in particular of glass fibers or of rock fibers, moving along a plane (X, Y) and a run direction (X), by detection and elimination of localized defects (M), in particular hot spots or wet spots, the apparatus comprising:
- a first member (2) for transporting the mat of mineral fibers (10),
- a second member (3) for transporting the mat of mineral fibers (10), the second transport member (3) being positioned after the first transport member (2) in the run direction (X) and separated therefrom in said direction by a treatment zone (4),
- a device (5) for detecting localized defects (M) in the mat of mineral fibers, located upstream of the treatment zone (4) in the run direction (X), and
- in the treatment zone (4), a device (6) for eliminating defects suitable for eliminating, in-line, in other words during the transportation of the mat of fibers and without interruption of this transportation, a defect (M) detected by the detection device (5) by eliminating the portion of mat containing it.

2. The treatment apparatus (1) as claimed in claim 1, wherein the detection device (5) comprises at least one infrared radiation detection member.

3. The treatment apparatus (1) as claimed in claim 1 or 2, wherein the elimination device is configured so that the portion of mat containing the defect is discharged in an elimination direction that passes through the thickness of the mat.

4. The treatment apparatus (1) as claimed in any one of claims 1 to 3, wherein the elimination device (6) is configured so that the portion of the mat containing the defect is discharged in an elimination direction (F) substantially parallel to the normal (Z) to the run plane (X,Y) of the mat.

5. The treatment apparatus (1) as claimed in any one of claims 1 to 4, wherein the elimination device (6) comprises pressure or pulling means (P) stressing a portion of the mat in an elimination direction (F).

6. The treatment apparatus (1) as claimed in claim 5, wherein the application direction of the force exerted by the pressure or pulling means forms an angle of between 3° and 20°, preferably between 3° and 10°, more preferentially still between 4° and 6°, with a direction normal (Z) to the run plane (X,Y).

7. The treatment apparatus (1) as claimed in claim 5 or 6, wherein the elimination device (6) comprises a plurality of pressure or pulling members (P), oriented toward the treatment zone (4), and distributed in a lateral direction (Y) of the apparatus.

8. The treatment apparatus (1) as claimed in claim 7, further comprising transmission means for transmitting to the elimination device (6) information on the positioning of the defect (M) in the lateral direction (Y), and means for selective control of each pressure or pulling member (P) as a function of said information.

9. The treatment apparatus (1) as claimed in any one of claims 1 to 8, wherein the distance (d) between the first transport surface of the first transport member and the second transport surface of the second transport member is between 50 and 150 mm, preferably between 80 and 120 mm.

10. The treatment apparatus (1) as claimed in any one of claims 1 to 9, further comprising, in the treatment zone, at least one hatch suitable for being opened and closed in a controlled manner under the mat of mineral fibers (10).

11. A production line (20) for producing a product based on mineral fibers, in particular on glass fibers or on rock fibers, comprising at least:
- a fiberizing device (22) for obtaining mineral fibers,
- a device (24) for spraying a binder on said mineral fibers, for the formation of a mat of mineral fibers bound by a binder (10), and
- a binder crosslinking device (30),
wherein the production line (20) further comprises, between the spraying device (24) and the binder crosslinking device (30), a treatment apparatus (1) as claimed in any one of claims 1 to 10.

12. The production line (20) as claimed in claim 11, further comprising a device (28) for cross-lapping the mat of fibers (10), between the treatment apparatus (1) and the binder crosslinking device (30).

13. The production line (20) as claimed in claim 11 or 12, further comprising a crimping device (26), between the treatment apparatus (1) and the binder crosslinking device (30) .

14. A process for treating a mat of mineral fibers (10), in particular of glass fibers or of rock fibers, moving along a plane (X, Y) and a run direction (X), by detection and elimination of localized defects (M), in particular hot spots or wet spots, by means of an apparatus as claimed in any one of claims 1 to 10, the process comprising:
- transporting the mat of mineral fibers (M) on a first transport member (2), then on a second transport member (3) positioned after the first transport member (2) and separated therefrom by a treatment zone (4) in the run direction (X),
- detecting localized defects (M) in the mat of mineral fibers (10), upstream of the treatment zone (4) in the run direction (X), and
- in the treatment zone (4), eliminating, in-line, in other words during the transportation of the mat of fibers and without interruption of this transportation, a detected defect (M) by eliminating the portion of mat containing it.

15. The treatment process as claimed in claim 14, wherein the portion of mat containing the defect is discharged in an elimination direction that passes through the thickness of the mat.

16. The treatment process as claimed in claim 14 or 15, wherein the mat of mineral fibers is a blanket of mineral fibers bound by an uncured binder.

17. The treatment process as claimed in claim 14 or 15, wherein the mat of mineral fibers is a mat of mineral fibers that are not bound by a binder.

18. A process for producing a product based on mineral fibers bound by a binder, in particular glass fibers or rock fibers, comprising at least:
- the obtaining of mineral fibers,
- the spraying of a binder on said mineral fibers, for the formation of a mat of mineral fibers bound by a binder (10), and
- the crosslinking of the binder,
the process further comprising, between the spraying and the crosslinking of the binder, the treatment of the mat of mineral fibers (10) by detection and elimination of localized defects, in particular hot spots or wet spots, as claimed in the treatment process of claim 14.
